# FASCICULE DE BREVET EUROPEEN

(11) **EP 3 660 361 B1**
(45) Date de publication et mention de la délivrance du brevet: **11.08.2021**
(21) Numéro de dépôt: 19210846.2
(22) Date de dépôt: 22.11.2019
(51) Int. Cl.: F01D 25/18, F16J 15/3288, F01D 11/00

(54) **JOINT À BROSSE COMPRENANT AU MOINS DEUX GROUPES DE POILS**
BÜRSTENDICHTUNG, DIE MINDESTENS ZWEI BORSTENGRUPPEN UMFASST
BRUSH SEAL COMPRISING AT LEAST TWO HAIR GROUPS

(30) Priorité: 27.11.2018 FR 1871938
(43) Date de publication de la demande: 03.06.2020
(73) Titulaire: SAFRAN AIRCRAFT ENGINES, 75015 Paris (FR)
(72) Inventeur: NICOLAS, Kévin, 77550 Moissy-Cramayel (FR); SCHWEITZER, Laurent, 77550 Moissy-Cramayel (FR)
(74) Mandataire: Cabinet Beau de Loménie

(56) Documents cités:
- EP-A2- 2 818 771
- WO-A1-92/14951
- WO-A2-2004/085889
- WO-A2-2014/014426
- US-A1- 2004 000 760
- US-A1- 2012 326 393

## Description

### Domaine technique

Le présent exposé concerne un joint à brosse, ainsi qu'une machine tournante comprenant le joint à brosse.

### Technique antérieure

Il est connu de l'art antérieur des joints à brosse comprenant un corps, et une nappe de poils destinée à venir au contact d'un rotor. La nappe de poil comprend des poils par exemple en métal ou en carbone. La nappe de poil permet ainsi de réaliser une étanchéité à un fluide entre deux espaces d'une machine tournante. Toutefois, la quantité d'huile dans la nappe, et son interaction avec les poils n'étant pas maîtrisée, des phénomènes défavorables à l'étanchéité peuvent apparaître. Par exemple, une quantité insuffisante ou excessive d'huile peut entraîner une augmentation de la perméabilité à l'air et à l'huile. Ces perméabilités peuvent rendre ces joints à brosses inaptes pour certaines applications, dont les exigences en matière d'étanchéité sont importantes.

WO 2004/085889 A2 divulgue un joint à brosse selon la partie pré-caractérisante de la revendication 1.

### Exposé de l'invention

Le présent exposé vise à résoudre tout ou partie des inconvénients mentionnés ci-dessus.

A cet effet, le présent exposé concerne un joint à brosse pour machine tournante selon la revendication 1.

On comprend que la brosse est configurée pour isoler un premier espace d'un deuxième espace.

Par exemple, le premier espace comprend un fluide, tel que de l'huile, destinée à lubrifier les première et deuxième parties de la machine tournante, tandis que le deuxième espace comprend uniquement de l'air, et ne doit pas contenir d'huile. Le premier espace peut également comprendre de l'air huilé, c'est-à-dire de l'air chargé en particules d'huile.

Par exemple, la brosse forme une nappe de poils.

On appelle axe de la machine tournante, l'axe de symétrie (ou quasi-symétrie) de celle-ci. Cet axe correspond à l'axe de rotation de la machine tournante. La direction axiale correspond à la direction de l'axe de la machine tournante et une direction radiale est une direction perpendiculaire à l'axe de la machine tournante et coupant cet axe. De même, un plan axial est un plan contenant l'axe de la machine tournante et un plan radial est un plan perpendiculaire à cet axe.

Une circonférence s'entend comme un cercle appartenant à un plan radial et dont le centre appartient à l'axe de la machine tournante. Une direction tangentielle ou circonférentielle est une direction tangente à une circonférence ; elle est orthogonale à l'axe de la machine tournante mais ne passe pas par l'axe. Sauf précision contraire, les adjectifs intérieur/interne et extérieur/externe sont utilisés en référence à une direction radiale de sorte que la partie intérieure d'un élément est, suivant une direction radiale, plus proche de l'axe de la machine tournante que la partie extérieure du même élément.

On entend par groupe de poils un ensemble de poils représentant au moins 10% du nombre de poils de la brosse.

On comprend que les poils du premier groupe de poils présentent tous sensiblement les mêmes premiers paramètres, c'est à dire à 10% près, de préférence 5% près.

On comprend que les poils du deuxième groupe de poils présentent tous sensiblement les mêmes deuxièmes paramètres, c'est à dire à 10% près, de préférence 5% près.

Grâce à ces dispositions, l'étanchéité du joint à brosse est améliorée et l'interaction entre les poils et la quantité d'huile est mieux maîtrisée. Le joint à brosse selon le présent exposé permet donc d'empêcher le fluide de s'écouler selon la direction axiale entre les premier et deuxième espaces. Le joint à brosse selon le présent exposé peut donc être adapté pour des applications dont les exigences en matière d'étanchéité sont importantes.

Dans certains modes de réalisation, les poils du premier ou du deuxième groupe de poils sont frisés.

Ainsi, la performance en étanchéité du joint à brosse est améliorée.

Selon l'invention, les poils du premier groupe de poils sont oléophobes et les poils du deuxième groupe de poils sont oléophiles.

Ainsi, la performance en étanchéité à l'huile ou à l'eau huilée du joint à brosse est améliorée. En effet, les poils oléophiles permettant d'emprisonner les particules d'huiles, et les poils oléophobes permettant de les repousser, une barrière est formée entre les espaces.

Dans certains modes de réalisation, le dit au moins un paramètre est la rigidité. Dans certains modes de réalisation, les poils du premier groupe de poils comprennent une première rigidité et les poils du deuxième groupe de poils comprennent une deuxième rigidité, les première et deuxième rigidités étant différentes.

Dans certains modes de réalisation, la pluralité de poils comprend au moins un troisième groupe de poils présentant une troisième longueur, une troisième section et des troisièmes propriétés physico-chimiques.

La troisième longueur et/ou la troisième section et/ les troisièmes propriétés physico-chimiques est(sont) différente(s) des première et/ou deuxième longueurs, et/ou des première et/ou deuxième sections, et/ou des premières et/ou deuxièmes propriétés physico-chimiques.

Autrement dit, au moins un paramètre du troisième groupe, parmi la troisième longueur, la troisième section et les troisièmes propriétés physico-chimiques, est différent du paramètre correspondant du premier groupe et/ou du deuxième groupe.

Ainsi, la performance en étanchéité du joint à brosse est améliorée.

Dans certains modes de réalisation, les poils des premier et deuxième groupes de poils sont répartis dans la brosse de façon non périodique.

Ainsi, la performance en étanchéité du joint à brosse est améliorée. Par exemple, les poils de petit diamètre peuvent combler les espaces existants entre les poils de gros diamètre. La brosse présente ainsi une plus grande densité.

Dans certains modes de réalisation, les poils du premier groupe de poils se trouvent au niveau d'une portion centrale de la brosse et les poils du deuxième groupe de poils se trouvent au niveau d'au moins une portion périphérique de la brosse, ou inversement, de préférence selon une direction axiale.

Ainsi, l'étanchéité à l'air est améliorée.

Par exemple, les poils oléophobes peuvent être disposés de part et d'autre des poils oléophiles selon la direction axiale. Les poils oléophobes disposés en périphérie permettent d'améliorer l'étanchéité à l'huile, et les poils oléophiles, au centre, permettent de piéger l'huile. L'étanchéité à l'huile et à l'air est donc améliorée.

Autrement dit, un groupe de poils se trouve au niveau d'une portion centrale et l'autre groupe de poil, parmi les premier et deuxième groupes de poils, se trouve au niveau d'une portion périphérique de la brosse.

Par exemple, dans ce cas, on comprend que l'un des groupes de poils est séparé en deux sous-groupes, encadrant l'autre groupe selon la direction axiale.

Ainsi, la performance en étanchéité du joint à brosse est améliorée.

Dans certains modes de réalisation, des rangées de poils du premier groupe de poils et des rangées de poils du deuxième groupe de poils sont disposées de manière alternée, de préférence selon une direction axiale.

Ainsi, la performance en étanchéité du joint à brosse est améliorée.

Dans certains modes de réalisation, le premier groupe de poils comprend une première densité de poils et le deuxième groupe de poils comprend une deuxième densité de poils, les première et deuxième densités étant différentes. Ainsi, la performance en étanchéité du joint à brosse est améliorée.

Dans certains modes de réalisation, la densité des poils de l'un des groupes de poils est supérieure à la section d'un autre groupe de poils, par exemple, d'au moins 50%.

Par exemple, la première densité est comprise entre 10 000 et 20 000 poils/mm². Par exemple, la deuxième densité est comprise entre 20 000 et 30 000 poils/ mm².

Selon un mode de réalisation, les poils du premier groupe de poils ou du deuxième groupe de poils sont oléophobes sauf leur portion d'extrémité, leur portion d'extrémité étant oléophile. Ainsi, le contact entre la brosse et la deuxième partie est lubrifié ce qui améliore la performance du joint à brosse. En effet, une meilleure lubrification permet de limiter réchauffement entre la brosse et la deuxième partie, ce qui permet de limiter le risque de cokéfaction de l'huile et d'augmenter la durée de vie du joint à brosse.

Le présent exposé se rapporte en outre à une machine tournante comprenant un joint à brosse selon l'un quelconque des modes de réalisation susmentionnés.

### Brève description des dessins

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :
[Fig. 1] La figure 1 représente une machine tournante.
[Fig. 2] La figure 2 représente une portion d'une machine tournante comprenant une enceinte de roulement et un dispositif d'étanchéité.
[Fig. 3] La figure 3 représente un joint à brosse.
[Fig. 4] La figure 4 représente une section transversale d'une portion de la brosse du joint à brosse, dont les poils présentent des sections différentes.
[Fig. 5] La figure 5 représente une section longitudinale d'une portion de la brosse du joint à brosse dont les poils présentent des longueurs différentes.
[Fig. 6] La figure 6 représente une section longitudinale d'une portion de la brosse du joint à brosse dont les poils présentent des propriétés physico-chimiques différentes.
[Fig. 7A-7D] Les figures 7A à 7D représentent des répartitions différentes de poils dans la brosse.
[Fig. 8] La figure 8 représente une répartition non-périodique des poils dans la brosse.
[Fig. 9A-9B] Les figures 9A à 9B représentent des agencements de poils dans la brosse, les poils ayant une section ou des propriétés physico-chimiques variant sur sa longueur.

### Description des modes de réalisation

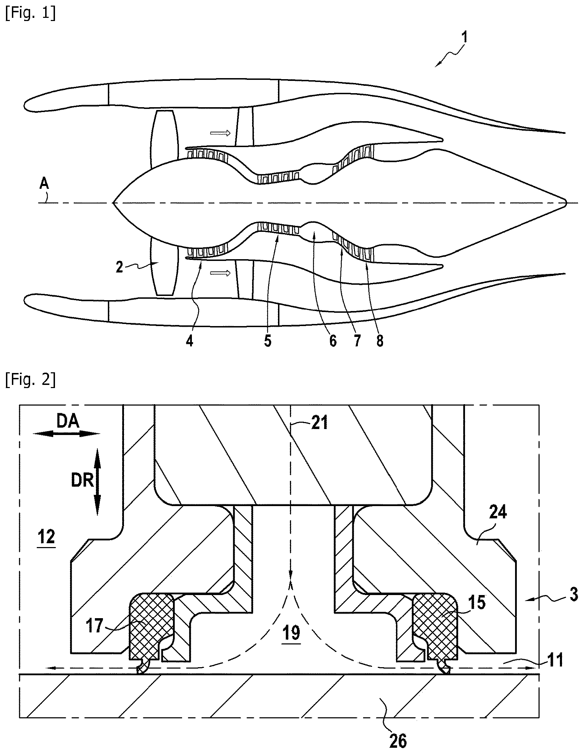

La figure 1, en coupe selon un plan vertical passant par son axe principal A, une machine tournante 1, ici un turboréacteur à double flux 1. Il comporte, d'amont en aval selon la circulation du flux d'air, une soufflante 2, un compresseur basse pression 4, un compresseur haute pression 5, une chambre de combustion 6, une turbine haute pression 7, et une turbine basse pression 8.

La figure 2 représente une portion d'une machine tournante 1 telle qu'une turbomachine, comprenant une enceinte de roulement et un dispositif d'étanchéité 3 entre un premier espace, ici l'enceinte de roulement 11, et un deuxième espace 12 de la machine tournante 1. L'enceinte de roulement 11 comprend de l'huile, ou de l'air huilé, servant de lubrifiant. Le dispositif d'étanchéité 3 comprend deux joints à brosse 15, 17 espacés axialement l'un de l'autre et définissant ainsi entre eux un espace d'étanchéité 19. Les joints à brosse 15, 17 s'étendent sensiblement selon une direction radiale DR. L'espace d'étanchéité 19 est relié à une alimentation en air, représentée par la flèche 21, de façon à maintenir l'espace d'étanchéité 19 à une pression supérieure à l'enceinte de roulement 11. Le premier joint à brosse 15 est disposé entre l'enceinte de roulement 11 et l'espace d'étanchéité 19. Le premier joint à brosse 15 réalise donc une étanchéité air/huile, ou air/air huilé. Le deuxième joint à brosse 17 est disposé entre l'espace d'étanchéité 19 et le deuxième espace 12.

Le deuxième joint à brosse 17 réalise donc une étanchéité air/air. Le deuxième joint à brosse 17 permet essentiellement la création de l'espace d'étanchéité 19, et ainsi de créer un espace pouvant être pressurisé par rapport à l'enceinte de roulement 11.

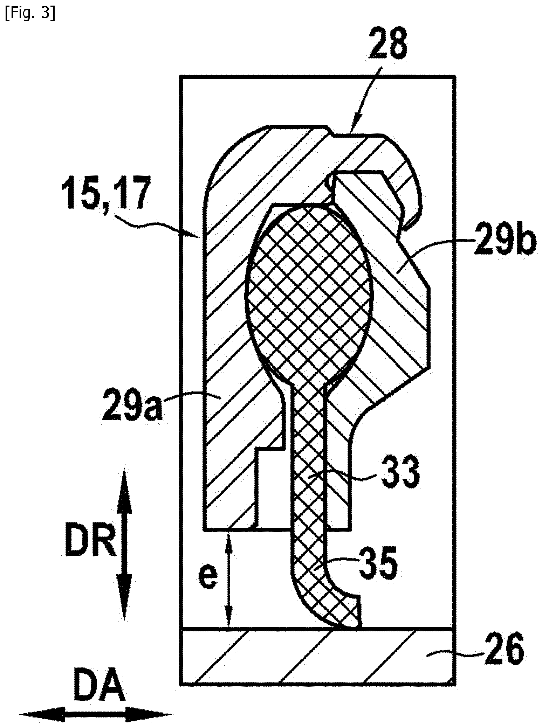

La figure 3 représentent un joint à brosse, pouvant être le premier joint à brosse 15 ou le deuxième joint à brosse 17.

Le joint à brosse 15, 17 est disposé entre une première partie 24 et une deuxième partie 26 de la machine tournante 1, mobiles l'une par rapport à l'autre. Dans le présent exemple, la première partie est un stator 24 et la deuxième partie est un rotor 26. Toutefois, dans d'autres exemples, chacune des première et deuxième parties pourraient être tournantes.

Le joint à brosse 15, 17 comprend un corps 28 destiné à être fixé, dans ce mode de réalisation, au stator 24. Le corps peut se présenter sous la forme d'une bague 28. Par exemple, la bague 28 comprend de l'aluminium. Comme représenté en figure 3, la bague 28 comprend deux portion 29a, 29b, emprisonnant une nappe de poils 33. Par exemple, les poils comprennent un matériau, tel qu'un un alliage, à base de métal ou un matériau à base de carbone, comme de la fibre de carbone telle que celle de la gamme de fibre TORAYCA®, par exemple les modèles T700 ou T800. Les poils de la nappe de poils 33 font saillie par rapport à la bague 28, ici vers l'intérieur, formant ainsi une brosse 35. La brosse 35 permet de combler un jeu e entre une extrémité interne de la bague 28 et le rotor 26. La longueur d'au moins les poils les plus longs de la brosse 35 faisant saillie par rapport à la bague 28 est plus grande que le jeu e entre une extrémité interne de la bague 28 et le rotor 26. Ainsi, en fonctionnement, les poils de la brosse 35 se courbent au contact du rotor 26, comme représenté en figure 3.

Selon le présent exposé, les poils de la brosse 35 ne sont pas identiques. Les paramètres intrinsèques des poils, par exemple la longueur, la section, les propriétés physico-chimiques, diffèrent. Généralement, la brosse 35 comprend plusieurs groupes de poils, les poils ayant, au sein du même groupe de poils, sensiblement les mêmes paramètres.

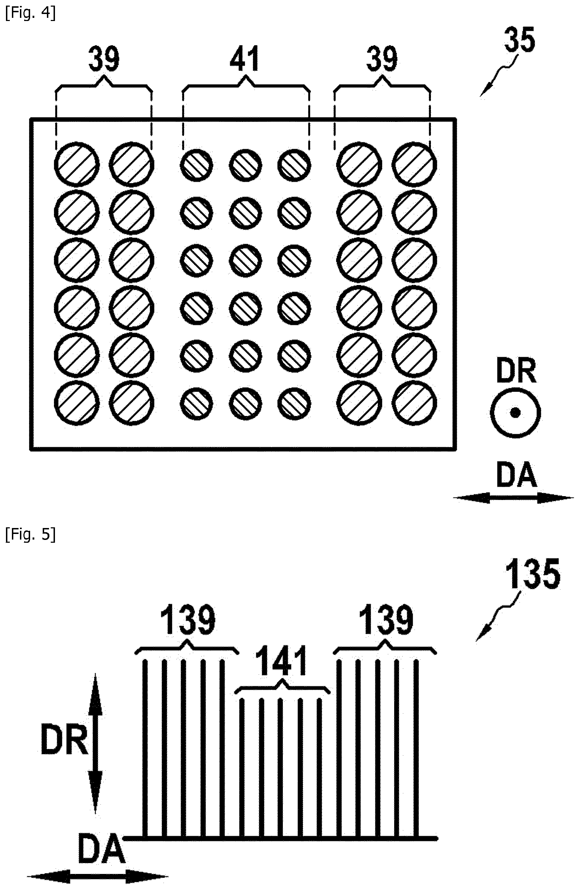

La figure 4 représente un premier exemple de type de poils et de répartition des poils dans la brosse 35. Ici, la brosse 35 comprend un premier groupe de poils 39 et un deuxième groupe de poils 41. Les poils du premier groupe de poils 39 présentent tous sensiblement la même première section, et les poils du deuxième groupe de poils 41 présentent tous sensiblement la même deuxième section, les première et deuxième sections étant différentes.

Dans l'exemple représenté, la première section présente un premier diamètre de 40 micromètres, et la deuxième section présente un deuxième diamètre est de 8 micromètres.

Dans l'exemple de réalisation représenté en figure 5, le premier groupe de poils 139 est réparti sur deux zones différentes, en périphérie selon la direction axiale DA. Le deuxième groupe de poils 141 occupe une zone centrale, disposée entre les deux zones périphériques occupées par le premier groupe de poils 139.

Selon un autre exemple de réalisation, au lieu, ou bien en plus, de faire varier la section des poils entre les premier et deuxième groupes de poils, on peut faire varier la longueur des poils entre ces deux groupes de poils 139, 141, comme représenté en figure 5. Ainsi, les poils du premier groupe de poils 139 présentent tous sensiblement une première longueur, et les poils du deuxième groupe de poils 141 présentent tous sensiblement une deuxième longueur, les première et deuxième longueurs étant différentes.

Dans l'exemple représenté, la première longueur est de 2 millimètres, et la deuxième longueur est de 3,5 millimètres.

Dans cet exemple, la répartition des groupes de poils 139, 141 dans la brosse 135 est analogue à la répartition décrite dans l'exemple précédent, représenté en figure 4.

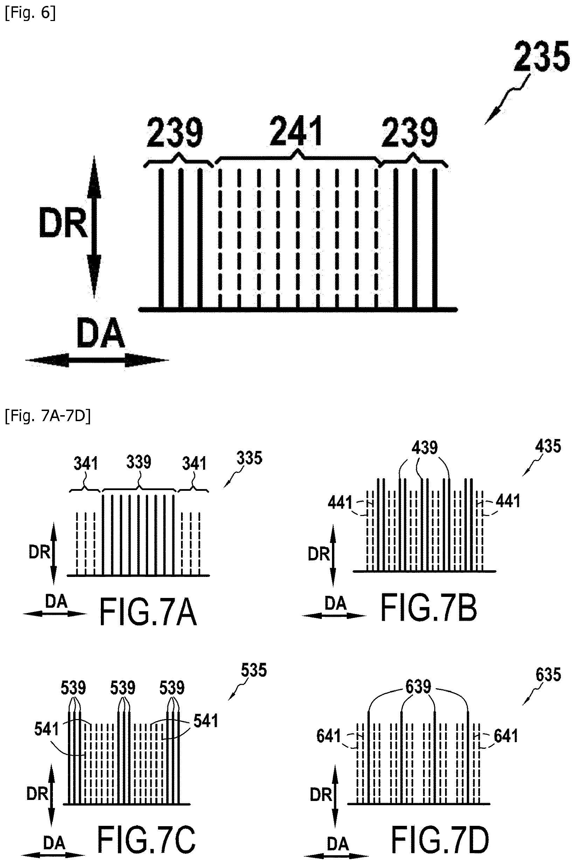

Selon un autre exemple de réalisation, représenté en figure 6, au lieu, ou bien en plus, de faire varier la section et/ou la longueur des poils entre les premier et deuxième groupes de poils, on peut faire varier le matériau et/ou le revêtement et/ou la texture des poils entre ces deux groupes de poils 239, 241, induisant des propriétés physico-chimiques différentes entre ces deux groupes de poils. Par exemple, les poils du premier groupe de poils 239 (en traits pleins) sont oléophobes et les poils du deuxième groupe de poils 241 sont oléophiles (en pointillés). Cette configuration a également pour effet d'améliorer l'étanchéité à l'air. Pour obtenir ces propriétés, les poils du premier groupe de poils 239 sont revêtus d'un dépôt de suie, ou bien d'un revêtement plus élaboré tel qu'un dépôt de polycarbonate ou de polystyrène ; et les poils du deuxième groupe de poils 241 sont en polypropylène.

Dans cet exemple, la répartition des groupes de poils 239, 241 dans la brosse 235 est analogue à la répartition décrite dans les exemples précédents, représentés en figures 4 et 5.

Bien entendu, les exemples décrits ci-dessus peuvent se combiner. Par exemple, tous les paramètres décrits ci-dessus, c'est-à-dire, la section, la longueur et les propriétés physico-chimiques peuvent être différents d'un groupe de poils à l'autre en même temps. Dans ce cas, la première longueur, la première section et les premières propriétés physico-chimiques sont différentes de la deuxième section, de la deuxième longueur et des deuxièmes propriétés physico-chimiques, respectivement. On pourrait également imaginer que seulement deux paramètres sur trois varient entre les premier et deuxième groupes de poils.

Comme décrit, les figures 4, 5 et 6 représentent, en outre, une certaine répartition des poils selon la direction axiale DA. Toutefois, d'autres répartitions des poils pourraient être envisagées, permettant également d'adapter les performances en étanchéité du joint à brosse 15, 17 selon la situation. Ainsi, d'autres exemples de répartition des poils sont décrits ci-après.

La figure 7A représente un exemple de répartition dans laquelle la position occupée par les premier et deuxième groupes est inversée par rapport aux figures 4 à 6. En effet, dans ce cas, le premier groupe de poils 339 occupe une zone centrale de la brosse 335 tandis que le deuxième groupe de poils 341 occupe une zone périphérique de la brosse 335, selon la direction axiale DA.

Selon un autre exemple de répartition des premier et deuxième groupes de poils au sein de la brosse 435, représentée en figure 7B, des rangées de poils du premier groupe de poils 439 et des rangées de poils du deuxième groupe de poils 441 sont disposées de manière alternée, selon la direction axiale DA. La figure 7B représente une alternance entre deux rangées de poils du premier groupe de poils 439 et deux rangées de poils du deuxième groupe de poils 441. Toutefois, on pourrait également imaginer une alternance entre une rangée de poils du premier groupe de poils 439et une rangée de poils du deuxième groupe de poils 441 ou bien d'autres configurations en alternance entre les premier et deuxième groupes de poils, comme représenté en figures 7C.

La figure 7C représente un autre exemple de répartition dans laquelle le premier groupe de poils 539 est divisé en trois portions et occupe les deux zones périphériques de la brosse selon la direction axiale DA et une zone centrale de la brosse 535. Dans ce cas, les poils du deuxième groupe de poils 541 occupent les zones restantes. Les poils des premier et deuxième groupes de poils sont donc également répartis de manière alternée.

La figure 7D représente un autre exemple de répartition laquelle chacun des poils du premier groupe de poils 639 est entouré de poils du deuxième groupe de poils 641, formant ainsi une pluralité de motifs. Dans l'exemple représenté en figure 7D, les différents motifs sont espacés les uns des autres au sein de la brosse 635, laissant ainsi des espaces vides entre eux.

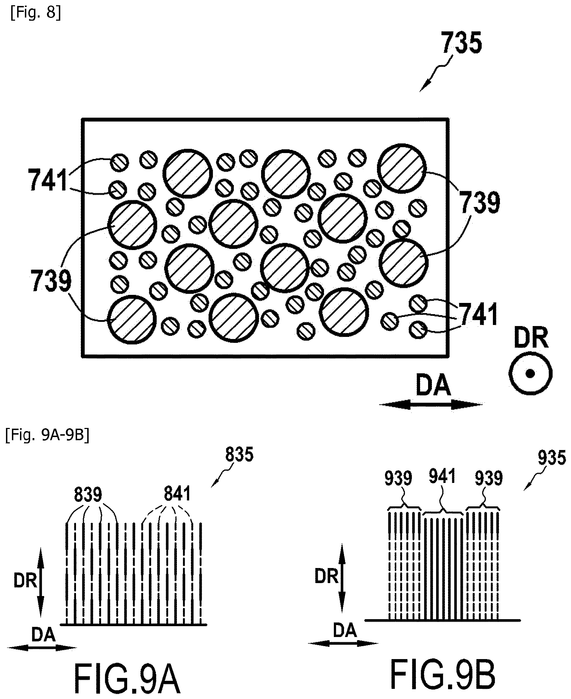

Selon un autre exemple de répartition des poils des premier et deuxième groupes de poils, représenté en figure 8, les poils des premier et deuxième groupes de poils 739, 741 sont répartis de façon non périodique au sein de la brosse 735. Selon un autre exemple de brosse 835 représenté en 9A, les poils du premier groupe de poils 839 comprennent chacun plusieurs portions, par exemple oléophiles et oléophobes, disposées de manière alternée le long du poil. De la même manière, les poils du deuxième groupe de poils 841 comprennent chacun plusieurs portions, oléophiles et oléophobes, disposées de manière alternée le long du poil. Les portions oléophiles et oléophobes des premier et deuxième groupes de poils 839, 841 sont disposées à des emplacements différents. Les poils des premier et deuxième groupes de poils présentent donc des propriétés physico-chimiques différentes, dues à la répartition différente des propriétés oléophiles et oléophobes le long des poils. Dans cet exemple, une répartition de différentes propriétés physico-chimiques le long des poils est décrite, mais une répartition de différentes sections le long du poil pourraient également être envisagée, induisant de ce fait des propriétés physico-chimiques différentes. Par exemple, un même poil pourrait présenter plusieurs sections entre sa racine et sa pointe, par exemple, une section croissante ou décroissante. Un poil pourrait également comprendre plusieurs sections et plusieurs propriétés physico-chimiques entre sa racine et sa pointe. Dans cet exemple, les poils ont tous la même longueur, mais on pourrait imaginer que la section et/ou longueur des poils des premier et deuxième groupes de poils soit(soient) différente(différentes).

Dans cet exemple, des rangées de poils des premier et deuxième groupes de poils sont disposées de manière alternée.

Selon une variante, représentée en figure 9B, les poils du premier groupe de poil 939 comprennent une portion, à leur racine, étant par exemple oléophile, et une deuxième portion oléophobe à leur pointe. En outre, dans cet exemple, les poils du premier groupe de poils 939 sont plus longs que les poils du deuxième groupe de poils 941. Dans ces exemples, les poils du premier groupe de poils 939 occupent les deux zones périphériques de la brosse 935 selon la direction axiale DA, et les poils du deuxième groupe de poils 941, ici oléophobes, occupent une zone centrale de la brosse 935 selon la direction axiale DA.

Selon un autre exemple de réalisation, la densité de poils entre les premier et deuxième groupes de poils diffère. Cela est notamment le cas de l'exemple représenté sur la FIG 8. Par exemple, le premier groupe de poils 739 comprend une première densité de poils, par exemple de 15 000 poils/cm2, et le deuxième groupe de poils 741 comprend une deuxième densité de poils, par exemple de 25 000 poils/cm2.

Selon un autre exemple de réalisation, l'un des paramètres des groupes de poils peut être la rigidité. Les poils du premier groupe de poils 39 présentent une première rigidité et les poils du deuxième groupe de poils 41 présentent une deuxième rigidité, les première et deuxième rigidités sont différentes.

Bien entendu, toutes les combinaisons de paramètres sont possibles, entre les groupes de poils et, éventuellement le long des poils.

Bien que la présente invention ait été décrite en se référant à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Joint à brosse (15, 17) pour machine tournante (1), destiné à être disposé entre une première partie (24) et une deuxième partie (26) de la machine tournante (1), les première et deuxième parties (24, 26) étant mobiles l'une par rapport à l'autre autour d'un axe, s'étendant selon une direction axiale (DA), le joint à brosse (15, 17) comprenant un corps (28) destiné à être fixé à la première partie (24), et une brosse (35) fixée au corps (28), destinée à être en contact avec la deuxième partie (26),
dans lequel la brosse (35) comprend au moins un premier groupe de poils (39) et un deuxième groupe de poils (41),
**caractérisé en ce que**
les poils du premier groupe de poils (39) sont oléophobes et les poils du deuxième groupe de poils (41) sont oléophiles.

2. Joint à brosse (15, 17) selon la revendication 1, dans lequel les poils du premier groupe de poils (39) comprennent une première rigidité et les poils du deuxième groupe de poils (41) comprennent une deuxième rigidité, les première et deuxième rigidités étant différentes.

3. Joint à brosse (15, 17) selon l'une des revendications précédentes, comprenant un matériau à base de métal ou un matériau à base de carbone.

4. Joint à brosse (15, 17) selon l'une des revendications précédentes, dans lequel les poils des premier et deuxième groupes de poils (39, 41) sont répartis dans la brosse (35) de façon non périodique.

5. Joint à brosse (15, 17) selon l'une des revendications 1 à 3, dans lequel les poils du premier groupe de poils (39) se trouvent au niveau d'une portion centrale de la brosse (35) et les poils du deuxième groupe de poils (41) se trouvent au niveau d'au moins une portion périphérique de la brosse (35), ou inversement, de préférence selon la direction axiale (DA).

6. Joint à brosse (15, 17) selon l'une des revendications 1 à 3, dans lequel des rangées de poils du premier groupe de poils (39) et des rangées de poils du deuxième groupe de poils (41) sont disposées de manière alternée, de préférence selon la direction axiale (DA).

7. Joint à brosse (15, 17) selon l'une des revendications précédentes, dans lequel le premier groupe de poils (39) comprend une première densité de poils et le deuxième groupe de poils (41) comprend une deuxième densité de poils, les première et deuxième densités étant différentes.

8. Machine tournante (1) comprenant un joint à brosse (15, 17) selon l'une quelconque des revendications précédentes.

## Patentansprüche

1. Bürstendichtung (15, 17) für eine umlaufende Maschine (1), welche dazu bestimmt ist, zwischen einem ersten Teil (24) und einem zweiten Teil (26) der umlaufenden Maschine (1) angeordnet zu werden, wobei der erste und der zweite Teil (24, 26) um eine sich in einer axialen Richtung (DA) erstreckende Achse relativ zueinander beweglich sind, wobei die Bürstendichtung (15, 17) einen Körper (28), der dazu bestimmt ist, an dem ersten Teil (24) befestigt zu werden, sowie eine Bürste (35) umfasst, die an dem Körper (28) befestigt und dazu bestimmt ist, mit dem zweiten Teil (26) in Kontakt zu sein,
wobei die Bürste (35) wenigstens eine erste Gruppe von Borsten (39) und eine zweite Gruppe von Borsten (41) umfasst,
**dadurch gekennzeichnet, dass**
die Borsten der ersten Gruppe von Borsten (39) oleophob sind und die Borsten der zweiten Gruppe von Borsten (41) oleophil sind.

2. Bürstendichtung (15, 17) nach Anspruch 1, bei der die Borsten der ersten Gruppe von Borsten (39) eine erste Steifigkeit aufweisen und die Borsten der zweiten Gruppe von Borsten (41) eine zweite Steifigkeit aufweisen, wobei die erste und die zweite Steifigkeit unterschiedlich sind.

3. Bürstendichtung (15, 17) nach einem der vorhergehenden Ansprüche, umfassend ein Material auf Metallbasis oder ein Material auf Kohlenstoffbasis.

4. Bürstendichtung (15, 17) nach einem der vorhergehenden Ansprüche, bei der die Borsten der ersten und der zweiten Gruppe von Borsten (39, 41) in der Bürste (35) auf nicht periodische Weise verteilt sind.

5. Bürstendichtung (15, 17) nach einem der Ansprüche 1 bis 3, bei der sich die Borsten der ersten Gruppe von Borsten (39) im Bereich eines mittleren Abschnitts der Bürste (35) befinden und die Borsten der zweiten Gruppe von Borsten (41) sich im Bereich wenigstens eines Umfangsabschnitts der Bürste (35) befinden, oder umgekehrt, vorzugsweise in axialer Richtung (DA).

6. Bürstendichtung (15, 17) nach einem der Ansprüche 1 bis 3, bei der Borstenreihen der ersten Gruppe von Borsten (39) und Borstenreihen der zweiten Gruppe von Borsten (41) abwechselnd, vorzugsweise in axialer Richtung (DA) angeordnet sind.

7. Bürstendichtung (15, 17) nach einem der vorhergehenden Ansprüche, bei der die erste Gruppe von Borsten (39) eine erste Borstendichte aufweist und die zweite Gruppe von Borsten (41) eine zweite Borstendichte aufweist, wobei die erste und die zweite Dichte unterschiedlich sind.

8. Umlaufende Maschine (1), die eine Bürstendichtung (15, 17) nach einem der vorhergehenden Ansprüche umfasst.

## Claims

1. A brush seal (15, 17) for a rotating machine (1), intended to be disposed between a first part (24) and a second part (26) of the rotating machine (1), the first and second parts (24, 26) being movable relative to each other about an axis, extending along an axial direction (DA), the brush seal (15, 17) comprising a body (28) intended be attached to the first part (24), and a brush (35) attached to the body (28), intended to be in contact with the second part (26),
wherein the brush (35) comprises at least a first group of bristles (39) and a second group of bristles (41),
**characterized in that** the bristles of the first group of bristles (39) are oleophobic and the bristles of the second group of bristles (41) are oleophilic.

2. The brush seal (15, 17) according to claim 1, wherein the bristles of the first group of bristles (39) comprise a first stiffness and the bristles of the second group of bristles (41) comprise a second stiffness, the first and second stiffnesses being different.

3. The brush seal (15, 17) according to any of the preceding claims, comprising a metal-based material or a carbon-based material.

4. The brush seal (15, 17) according to any of the preceding claims, wherein the bristles of the first and second groups of bristles (39, 41) are distributed non-periodically within the brush (35).

5. The brush seal (15, 17) according to any of claims 1 to 3, wherein the bristles of the first group of bristles (39) are located at a central portion of the brush (35) and the bristles of the second group of bristles (41) are located at least at one peripheral portion of the brush (35), or vice versa, preferably along the axial direction (DA).

6. The brush seal (15, 17) according to any of claims 1 to 3, wherein rows of bristles of the first group of bristles (39) and rows of bristles of the second group of bristles (41) are disposed alternately, preferably along the axial direction (DA).

7. The brush seal (15, 17) according to any of the preceding claims, wherein the first group of bristles (39) comprises a first bristle density and the second group of bristles (41) comprises a second bristle density, the first and second densities being different.

8. A rotating machine (1) comprising a brush seal (15, 17) according to any one of the preceding claims.
